# EUROPÄISCHE PATENTSCHRIFT

(11) **EP 3 332 305 B1**
(45) Veröffentlichungstag und Bekanntmachung des Hinweises auf die Patenterteilung: **02.12.2020**
(21) Anmeldenummer: 16741952.2
(22) Anmeldetag: 25.07.2016
(51) Int. Cl.: G06F 1/08, G06F 1/324, G06F 1/3237

(54) **VERFAHREN UND VORRICHTUNG ZUM BEREITSTELLEN EINES TAKTES FÜR EINE ELEKTRONISCHE SCHALTUNG UND PROZESSORVORRICHTUNG**
METHOD AND DEVICE FOR SUPPLYING A CLOCK FOR AN ELECTRONIC CIRCUIT, AND PROCESSOR DEVICE
PROCÉDÉ ET DISPOSITIF POUR FOURNIR UNE FRÉQUENCE D'HORLOGE DESTINÉE À UN CIRCUIT ÉLECTRONIQUE ET DISPOSITIF PROCESSEUR

(30) Priorität: 03.08.2015 DE 102015214758
(43) Veröffentlichungstag der Anmeldung: 13.06.2018
(73) Patentinhaber: Robert Bosch GmbH, 70442 Stuttgart (DE)
(72) Erfinder: PLETINCKX, Jo, 74372 Sersheim (DE)
(86) Internationale Anmeldenummer: PCT/EP2016/067661
(87) Internationale Veröffentlichungsnummer: WO 2017/021188

(56) Entgegenhaltungen:
- US-A1- 2013 021 072
- US-A1- 2013 191 677
- US-A1- 2014 003 443
- US-A1- 2014 095 909
- US-B1- 7 000 138
- US-B1- 7 958 483

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Zum Betrieb eines Prozessors wird der Prozessor mit einem Taktsignal versorgt.

Die US 2014/003443 A1 offenbart ein Neztwerkgerät, bei dem lastabhängig Taktzyklen eliminiert werden. Die US 2013/191677 A1 offenbart ein System, bei dem ein Taktsignal während eines Ruhezustands einer integrierten Schaltung überlagert werden kann. Die US 2013/021072 A1 offenbart ein Verfahren zum reduzieren einer Frequenz eines Taktsignals, indem einzelne Taktzyklen gesperrt werden. Die US 2014/095909 A1 offenbart ein Verfahren, bei dem ein Taktzyklus ausgelassen wird. Die US 7 000 138 B1 offenbart ein Verfahren bei dem aktive Flanken eines Takts pseudozufällig maskiert werden. Die US 7 958 483 B1 offenbart ein Verfahren, bei dem einem funktionalen Block ein Taktsignal zugeführt wird, das zeitweise deaktiviert wird.

### Offenbarung der Erfindung

Vor diesem Hintergrund werden mit dem hier vorgestellten Ansatz ein Verfahren zum Bereitstellen eines Taktes für eine elektronische Schaltung, weiterhin eine Vorrichtung, die dieses Verfahren verwendet und eine Prozessorvorrichtung sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Zur Reduzierung des Energieverbrauchs einer elektronischen Schaltung, beispielsweise in Form eines Prozessors, kann das Taktsignal zeitweise abgeschaltet werden. Aufgrund des An- und Abschaltens des Taktsignals und der daraus resultierenden sprunghaften Änderung des Energieverbrauchs der elektronischen Schaltung können elektromagnetische Störungen entstehen. Solche Störungen können verringert werden, wenn das An- und Abschalten des Taktsignals beispielsweise zufallsgesteuert durchgeführt wird.

Ein Verfahren gemäß der Erfindung wird in Anspruch 1 definiert. Eine Vorrichtung gemäß der Erfindung wird in Anspruch 6 definiert. Ein Computerprogramm gemäß der Erfindung wird in Anspruch 8 definiert.

Ein Verfahren zum Bereitstellen eines Taktes für eine elektronische Schaltung umfasst die folgenden Schritte:
Ausblenden von Taktzyklen eines Taktsignals unter Verwendung eines sequenzgesteuerten Ausblendsignals, um ein modifiziertes Taktsignal zu erhalten; und
Bereitstellen des modifizierten Taktsignals als den Takt für die elektronische Schaltung.

Eine elektronische Schaltung kann beispielsweise eine integrierte Schaltung wie ein Prozessor, ein ASIC oder ein FPGA sein. Unter Verwendung des Takts kann ein Systemtakt der elektronischen Schaltung generiert werden oder der Takt kann als Systemtakt der elektronischen Schaltung verwendet werden. Das Taktsignal kann durch eine zeitliche Aneinanderreihung von identischen Taktzyklen gebildet sein. Ein Taktzyklus kann zwei aufeinanderfolgende Signalflanken umfassen. Das Ausblendsignal weist eine Sequenz von Zuständen auf. Die Sequenz stellt eine zufallsgesteuerte oder pseudozufallsgesteuerte Sequenz oder eine andersartige, beispielsweise zählergesteuerte oder mustergesteuerte Sequenz dar. Abhängig von einem aktuellen Zustand des Ausblendsignals kann ein aktueller Taktzyklus des Taktsignals ausgeblendet werden oder nicht ausgeblendet werden. Unter dem Ausblenden eines Taktzyklus kann verstanden werden, dass während einer dem Taktzyklus zugeordneten Zeitspanne Signalflanken des Taktsignals unterdrückt werden. Somit kann das modifizierte Taktsignal dem Taktsignal mit dem Unterschied entsprechen, dass einige Taktzyklen des Taktsignals ausgeblendet sind. Eine Verteilung der ausgeblendeten Taktzyklen innerhalb des modifizierten Taktsignals ist dabei zumindest annähernd zufällig. Ein solches selektives Aus- und Einschalten des Taktes oder vorübergehendes Ausblenden eines oder mehrere Taktzyklen wird auch als Clock-Gating bezeichnet.

Gemäß einer Ausführungsform umfasst das Verfahren einen Schritt des Erzeugens des sequenzgesteuerten Ausblendsignals unter Verwendung einer Erzeugungsvorschrift. Beispielsweise kann das Ausblendsignal dabei als eine sequenzgesteuerte Ausblendsignalsequenz erzeugt werden. Diese Sequenz ist zufallsgesteuert oder pseudo zufallsgesteuert, beispielsweise abgeleitet aus einem oder mehreren Pseudo-Zufallsgeneratoren (pseudo-random binary sequence generator). Andere mögliche Sequenzen können beispielsweise von einem Zähler abgeleitet werden. Dieser Zähler kann Zahlenwerte in einer bestimmten Reihenfolge generieren, wobei diese Zahlenwerte beispielsweise auch entstehen können durch eine Änderung der Wertigkeit der einzelnen Bits. Außerdem können unterschiedliche Zählervarianten zum Einsatz kommen (bspw. Gray-basierter Zähler). Die Erzeugung des Ausblendsignals bietet sich an, wenn keine geeignete Zufallssequenz zur Bildung des Ausblendsignals zur Verfügung steht.

In diesem Fall kann das Verfahren einen Schritt des Einstellens eines Parameters der Erzeugungsvorschrift umfassen, wobei der Parameter ein Verhältnis zwischen ersten Zuständen und zweiten Zuständen des Ausblendsignals definieren kann. Dabei kann im Schritt des Ausblendens ein Taktzyklus des Taktsignals ausgeblendet werden, wenn das Ausblendsignal den ersten Zustand aufweist. Entsprechend kann ein Taktzyklus des Taktsignals nicht ausgeblendet werden, wenn das Ausblendsignal den zweiten Zustand aufweist. Über den Parameter kann ein Anteil der Taktzyklen des Taktsignals bestimmt werden, die ausgeblendet werden. Beispielsweise kann der Anteil erhöht werden, wenn eine Arbeitsbelastung der elektronischen Schaltung gering ist, und verringert werden, wenn die Arbeitsbelastung hoch ist.

Daher kann im Schritt des Einstellens der Parameter unter Verwendung eines eine Auslastung der elektronischen Schaltung anzeigenden Auslastungssignals eingestellt werden. Auf diese Weise kann das modifizierte Taktsignal an die Arbeitsbelastung der elektronischen Schaltung angepasst werden.

Gemäß der Erfindung können im Schritt des Ausblendens Taktzyklen des Taktsignals abhängig von einem Modussignal ausgeblendet werden, um das modifizierte Taktsignal zu erhalten. Dabei können alle Taktzyklen des Taktsignals ausgeblendet werden, wenn das Modussignal einen Schlafmodus anzeigt. Ferner können einige der Taktzyklen des Taktsignals unter Verwendung des Ausblendsignals ausgeblendet werden, wenn das Modussignal einen Drosselmodus anzeigt. Zusätzlich oder alternativ zu dem Schlafmodus können keine Taktzyklen des Taktsignals ausgeblendet werden, wenn das Modussignal einen Normalmodus anzeigt. Im Schlafmodus kann der Energieverbrauch der elektronischen Schaltung auf ein Minimum reduziert werden. Im Normalmodus kann eine maximale Leistungsfähigkeit der elektronischen Schaltung sichergestellt werden. Gemäß einer Ausführungsform kann in beliebiger Reihenfolge zwischen den Modi gewechselt werden.

Gemäß der Erfindung wird im Schritt des Ausblendens alternierend eine vorbestimmte Anzahl von aufeinanderfolgenden Taktzyklen ausgeblendet und eine weitere vorbestimmte Anzahl von aufeinanderfolgenden Taktzyklen nicht ausgeblendet werden, wenn das Modussignal einen Speichermodus anzeigt. Der Speichermodus wird aktiviert, wenn Daten aus einem Speicher gelesen werden, der mit einer geringeren Taktrate als die elektronische Schaltung betrieben wird. Generell, kann in beliebiger Reihenfolge zwischen den Modi gewechselt werden.

Gemäß einer Ausführungsform kann das Verfahren einen Schritt des Bereitstellens des Taktsignals zusätzlich zu dem modifizierten Taktsignal an eine Schnittstelle zu der elektronischen Schaltung umfassen. Auf diese Weise können Teilbereiche der elektronischen Schaltung auch dann noch mit dem vollen Takt versorgt werden, wenn das modifizierte Taktsignal eine reduzierte Anzahl von Taktzyklen aufweist.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Eine elektronische Schaltungsvorrichtung, beispielsweise eine Prozessorvorrichtung, weist die folgenden Merkmale auf:
eine Einrichtung zum Bereitstellen eines Taktsignals;
eine elektronische Schaltung, beispielsweise in Form eines Prozessors; und
eine genannte Vorrichtung zum Bereitstellen eines Taktes für die elektronische Schaltung.

Unter der Einrichtung zum Bereitstellen eines Taktsignals kann beispielsweise ein Taktgenerator verstanden werden.

Das genannte Verfahren kann beispielsweise in Software oder Hardware oder in einer Mischform aus Software und Hardware beispielsweise in einem Steuergerät implementiert sein.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine Gegenüberstellung von möglichen Takten für eine elektronische Schaltung gemäß einem Ausführungsbeispiel;
Fig. 2 ein Blockschaltbild einer Vorrichtung zum Bereitstellen eines Taktes für eine elektronische Schaltung gemäß einem Ausführungsbeispiel;
Fig. 3 ein Ablaufdiagramm eines Verfahrens zum Bereitstellen eines Taktes für eine elektronische Schaltung gemäß einem Ausführungsbeispiel; und
Fig. 4 ein Blockschaltbild einer Vorrichtung zum Bereitstellen eines Taktes für eine elektronische Schaltung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

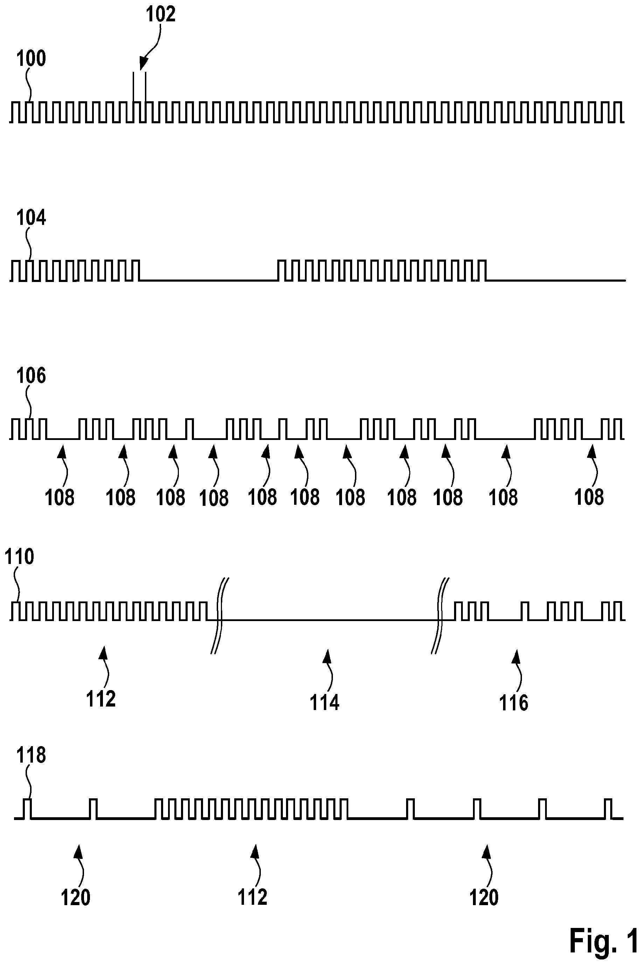

Fig. 1 zeigt eine Gegenüberstellung von möglichen Takten für eine elektronische Schaltung gemäß einem Ausführungsbeispiel.

Gezeigt ist ein erstes Taktsignal 100 in form eines periodischen Rechtecksignals. Das Taktsignal oszilliert dabei zwischen einem ersten und einem zweiten Logikpegel. Beispielhaft ist ein Taktzyklus 102 des Taktsignals 100 gezeigt, der zwei zeitlich direkt aufeinanderfolgende Abschnitte umfasst in denen das Taktsignal den ersten und den zweiten Signalpegel aufweist.

Ein zweites Taktsignal 104 entspricht dem ersten Taktsignal 100, mit dem Unterschied, dass es Zeitabschnitte aufweist, in denen keine Taktzyklen auftreten.

Ferner ist ein modifiziertes Taktsignal 106 gezeigt, dass dem ersten Taktsignal 100 entspricht, mit dem Unterschied, dass sequenzgesteuert ausgewählte Taktzyklen des Taktsignals 100 ausgeblendet sind. Das Taktsignal 106 weist somit Zeitabschnitte 108 auf, in denen keine Taktzyklen auftreten, das Taktsignal also konstant einen Logikpegel aufweist. Eine Verteilung der Zeitabschnitte 108, in denen keine Taktzyklen auftreten, ist zufällig oder pseudozufällig. Gemäß einem Ausführungsbeispiel sind zusätzlich oder alternativ Zeitdauern der einzelnen Zeitabschnitte 108, in denen keine Taktzyklen auftreten, sequenzgesteuert definiert. Dabei kann beispielsweise eine maximale Länge einer solchen Zeitdauer fest oder einstellbar vorgegeben sein, beispielsweise auf einen Wert kleiner als 5, kleiner als 10, kleiner als 20 oder kleiner als 50 Taktzyklen.

Anhand eines weiteren Taktsignals 110 sind unterschiedliche Modi 112, 114, 116, 120 gezeigt, in denen die elektronische Schaltung betrieben werden kann. Zwischen den Modi 112, 114, 116, 120 kann prinzipiell umgeschaltet werden. Beispielsweise kann aus einem Speichermodus 120 in einen Schlafmodus 114 und wieder zurück geschaltet werden. In jedem der Modi 112, 114, 116, 120 weist das Taktsignal 110 einen für den jeweiligen Modus 112, 114, 116, 120 charakteristischen Taktverlauf auf. In einem Normalmodus 112 entspricht der Taktverlauf des Taktsignals 110 dem Verlauf des Taktsignals 100. In dem Schlafmodus 114 weist das Taktsignal 110 keine Taktzyklen auf und liegt konstant auf einem Signalpegel. In einem Drosselmodus 116 entspricht der Taktverlauf des Taktsignals 110 dem Verlauf des Taktsignals 106.

Ein weiteres Taktsignal 118 zeigt den Normalbetriebsmodus 112 umringt von je einem Speichermodus 120. In dem Speichermodus verbleibt das Taktsignal 118 zwischen zwei Taktzyklen über eine vorbestimmte Zeitdauer auf einem Signalpegel, die länger als die Zeitdauer eines Taktzyklus ist. Dazu kann beispielsweise das Taktsignal 100 als Eingangssignal genommen werden und es können alternierend eine vorbestimmte Anzahl von aufeinanderfolgenden Taktzyklen ausgeblendet und eine weitere vorbestimmte Anzahl von aufeinanderfolgenden Taktzyklen nicht ausgeblendet werden.

Die Taktsignale 100, 104, 106, 110, 118 können als Takt für eine elektronische Schaltung, wie beispielsweise einen Prozessor, eingesetzt werden. Ein solcher Prozessor führt Instruktionen in einer Geschwindigkeit aus, die auch Taktfrequenz oder clock frequency genannt wird. Die Taktfrequenz wird durch ein Taktsignal 100, 104, 106, 110, 118 gesetzt. In einfachen Designs ist diese Taktfrequenz fixiert, entsprechend dem Taktsignal 100. Um Energie zu sparen, kann das Taktsignal 100 durch eine externe Einheit gesperrt werden (engl. gated). Diese Sperroperation reduziert wirksam die Frequenz des Taktsignals 100 und dadurch den Energieverbrauch des Prozessors, da der Energieverbrauch in einer ersten Annäherung linear mit der Taktfrequenz korreliert.

In einem typischen Design wird ein Prozessor betrieben, bis alle Aufgaben abgeschlossen sind, woraufhin der Takt abgeschaltet, also gegated wird. Wenn neue Aufgaben anstehen, beispielsweise durch das Auftreten eines Interrupts, wird der Takt wieder eingeschaltet und der Prozessor arbeitet weiter, wie es anhand des Taktsignals 104 dargestellt ist. Der Nachteil dieses Ansatzes besteht darin, dass die verbrauchte Energie auf eine vorhersehbare und wiederholbarer Weise große spektrale Spitzen aufweist, wenn der Prozessor ausgeschaltet und eingeschaltet wird. Dies tritt beispielsweise auf, wenn der Betrieb des Prozessors an die Abtastrate eines externen Analog-Digital-Wandler gekoppelt ist. Die Modulation des Energieverbrauchs kann zu Problemen im Hinblick auf die elektromagnetische Kompatibilität führen. Zusätzlich kann die niederfrequent regulierte Energie zu höheren Anforderungen für einen on-chip Spannungsregulierer führen. Ebenso können strombasierte Kommunikationsschemas durch diese aufgabenbasierte Modulation der verbrauchten Energie gestört werden.

Der hier beschriebene Ansatz wird verwendet, um das Niveau von spektralen Spitzen in dem Energieverbrauch zu reduzieren, während die Reduzierung des Energieverbrauchs durch das Sperren des Takts beibehalten wird.

Um dieses Ziel zu erreichen, wird die Zeitspanne, während der das Sperren des Takts durchgeführt wird, über die Zeit verteilt, beispielsweise auf eine pseudozufällige Weise. Auf diese Weise werden viele kleinere Auszustand- und Anzustand-Zeitschlitze für den Prozessor generiert anstelle zweier aufeinanderfolgender Auszustand- und Anzustand-Zeitschlitze. Auf diese Weise wird die Modulation des Energieverbrauchs über eine größere Bandbreite verteilt und zu höheren Frequenzen verschoben. Dieser Ansatz ist anhand des Taktsignals 106 ersichtlich, das die genannten vielen kleineren Auszustand- und Anzustand-Zeitschlitze aufweist.

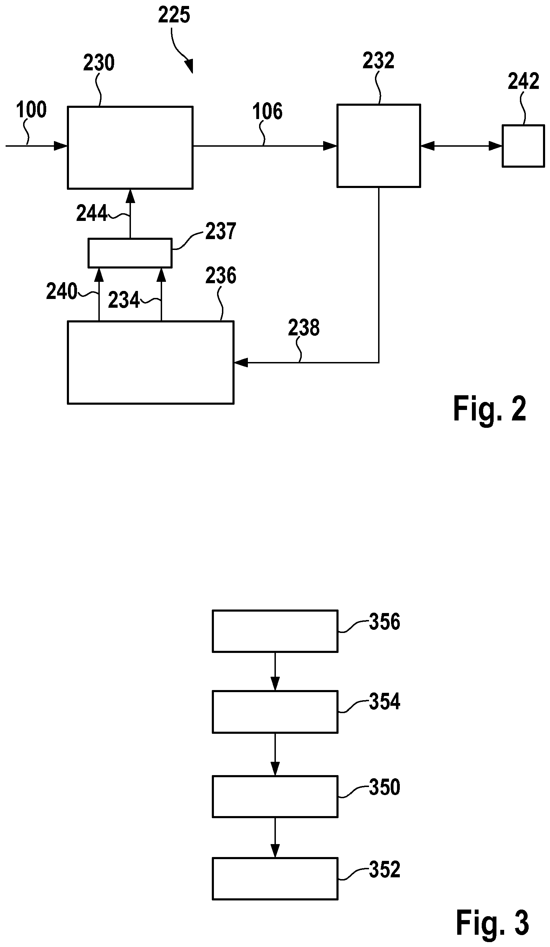

Fig. 2 zeigt ein Blockschaltbild einer Vorrichtung 225 zum Bereitstellen eines Taktes für eine elektronische Schaltung 232 gemäß einem Ausführungsbeispiel. Die Vorrichtung 225 weist eine Ausblendeinrichtung 230 auf, die ausgebildet ist, um ein Taktsignal 100 über eine Schnittstelle zu einer Einrichtung zum Bereitstellen des Taktsignals 100 zu empfangen und unter Verwendung des Taktsignals 100 ein modifiziertes Taktsignal 106 zu erzeugen und an eine Schnittstelle zu der elektronischen Schaltung 232 bereitzustellen. Bei dem Taktsignal 100 kann es sich um das anhand von Fig. 1 beschriebene Taktsignal 100 und bei dem modifizierten Taktsignal 106 um das anhand von Fig. 1 beschriebene modifizierte Taktsignal 106 handeln.

Gemäß diesem Ausführungsbeispiel ist die Ausblendeinrichtung 230 ausgebildet, um zum Erzeugen des modifizierten Taktsignals 106 Taktzyklen aus dem Taktsignal 100 auszublenden, beispielsweise durch Unterdrücken der jeweiligen Taktzyklen. Die Ausblendeinrichtung 230 ist ausgebildet, um die Entscheidung, ob ein aktueller Taktzyklus des Taktsignals 100 ausgeblendet oder nicht ausgeblendet wird, unter Verwendung eines sequenzgesteuerten Ausblendsignals 234 zu treffen. Das Ausblendsignal 234 weist eine Sequenz von ersten und zweiten Zuständen auf. Abhängig davon, ob das Ausblendsignal 234 den ersten oder den zweiten Zustand aufweist, ist die Ausblendeinrichtung 230 ausgebildet, um einen Taktzyklus auszublenden oder nicht auszublenden. Eine Verteilung der Zustände des Ausblendsignals 234 ist zufallsgesteuert oder pseudo-zufallsgesteuert, wobei beispielsweise eine Anzahl aufeinanderfolgender erster Zustände oder aufeinanderfolgender zweiter Zustände begrenzt sein kann.

Gemäß unterschiedlicher Ausführungsbeispiele wird das Ausblendsignal 234 direkt über eine Schnittstelle zu einer Modifizierungseinrichtung 236 zum Erzeugen des Ausblendsignals 234 oder über eine Schnittstelle zu einer Kombinationseinrichtung 237 oder einer anderen Einrichtung empfangen. Somit kann die Modifizierungseinrichtung 236 und gegebenenfalls die Kombinationseinrichtung gemäß einem Ausführungsbeispiel als ein Teil der Vorrichtung 225 angesehen werden.

Die Modifizierungseinrichtung 236 ist ausgebildet, um das Ausblendsignal 234 unter Verwendung einer Erzeugungsvorschrift zu erzeugen. Beispielsweise kann die Erzeugungsvorschrift einen Zufallsgenerator oder einen Pseudozufallsgenerator zum Erzeugen einer geeigneten Sequenz abbilden. Ein Verhältnis zwischen den Zuständen des Ausblendsignals 234, die über das Ausblenden oder Nichtausblenden eines Taktzyklus entscheiden, ist gemäß einem Ausführungsbeispiel fest vorgegeben und gemäß einem weiteren Ausführungsbeispiel über einen Parameter einstellbar. Gemäß einem Ausführungsbeispiel ist ein Wert des Parameters und somit das Verhältnis zwischen den Zuständen des Ausblendsignals unter Verwendung eines Auslastungssignals 238 einstellbar. Das Auslastungssignal 238 zeigt dabei eine Auslastung der elektronischen Schaltung 232 an. Das Auslastungssignal 238 wird von der Modifizierungseinrichtung 236 über eine Schnittstelle empfangen. Gemäß einem Ausführungsbeispiel wird das Auslastungssignal 238 von der elektronischen Schaltung 232 bereitgestellt.

Gemäß der Erfindung ist die Vorrichtung 225 ausgebildet, um Taktzyklen des Taktsignals 100 abhängig von einem Betriebsmodus auszublenden, in dem die elektronische Schaltung232 betrieben wird oder zu betreiben ist. Mögliche Betriebsmodi sind ein Normalbetriebsmodus, ein Schlafmodus, ein Drosselmodus und ein Speichermodus. Im Normalbetriebsmodus ist die Ausblendeinrichtung 230 ausgebildet, um keinen Taktzyklus des Taktsignals 100 auszublenden. In diesem Fall entspricht das modifizierte Taktsignal 106 dem Taktsignal 100. Im Schlafbetriebsmodus ist die Vorrichtung 225 ausgebildet, um alle Taktzyklen des Taktsignals 100 auszublenden. In diesem Fall entspricht das modifizierte Taktsignal 106 dem in Fig. 1 gezeigten Taktsignal 110 während des Schlafmodus 114. Im Drosselbetriebsmodus ist die Vorrichtung 225 ausgebildet, um Taktzyklen des Taktsignals 100 zufallsgesteuert oder pseudo-zufallsgesteuert auszublenden. In diesem Fall entspricht das modifizierte Taktsignal 106 dem in Fig. 1 gezeigten modifizierten Taktsignal 106. Im Speicherbetriebsmodus ist die Vorrichtung 225 ausgebildet, um eine vorbestimmte Anzahl von Taktzyklen auszublenden und nicht auszublenden, um eine Verlangsamung des von dem Taktsignal 100 übertragenen Takt zu bewirken. Beispielsweise ist die Vorrichtung 225 in diesem Fall dazu ausgebildet, um jeden x-ten Taktzyklus des Taktsignals 100 nicht auszublenden und alle übrigen Taktzyklen des Taktsignals 100 auszublenden. In diesem Fall entspricht das modifizierte Taktsignal 106 dem in Fig. 1 gezeigten Taktsignal 118 während des Speichermodus 120. Der Speichermodus kann beispielsweise ansprechend auf einen Zugriff der elektronischen Schaltung 232 auf einen Speicher 242 verwendet werden, um einen Betriebstakt der elektronischen Schaltung 232 an einen Betriebstakt des Speichers 242 anzupassen. Beispielsweise kann eine Information über den Zugriff auf den Speicher 242 ebenfalls über das Signal 238 an die Modifizierungseinrichtung 236 bereitgestellt werden.

Ein Modussignal kann von verschiedenen Instanzen erzeugt bzw. beeinflusst werden. So kann der Prozessor 232 den Wunsch äußern, in den Schlafmodus, Drosselmodus oder Normalmodus versetzt zu werden. Das Auftreten eines Interrupts kann ebenfalls den Wechsel in einen beliebigen Modus aus dem Schlafmodus auslösen. Eine dem Prozessor 232 übergeordnete Einheit kann ebenfalls den Wechsel in einen der verschiedenen Modi auslösen.

Gemäß einem Ausführungsbeispiel ist die Modifizierungseinrichtung 236 ausgebildet, um ein entsprechendes Modussignal 240 zu erzeugen, das anzeigt, in welchem Betriebsmodus die elektronische Schaltung 232 zu betreiben ist. Das Modussignal 240 kann entsprechend zu dem Ausblendsignal 234 direkt an die Ausblendeinrichtung 230 bereitgestellt werden. Alternativ werden das Ausblendsignal 234 und das Modussignal 240 in der Kombinationseinrichtung 237 zu einem Steuersignal 244 kombiniert und das Steuersignal 244 wird an die Ausblendeinrichtung 230 bereitgestellt. In diesem Fall entspricht das Steuersignal 244 gemäß einem Ausführungsbeispiel im Drosselmodus dem Ausblendsignal 234, weist im Schlafmodus einen Zustand auf, der ein Ausblenden der Taktzyklen des Taktsignals 100 bewirkt, und weist im Normalmodus einen weiteren Zustand auf, der kein Ausblenden der Taktzyklen des Taktsignals 100 bewirkt.

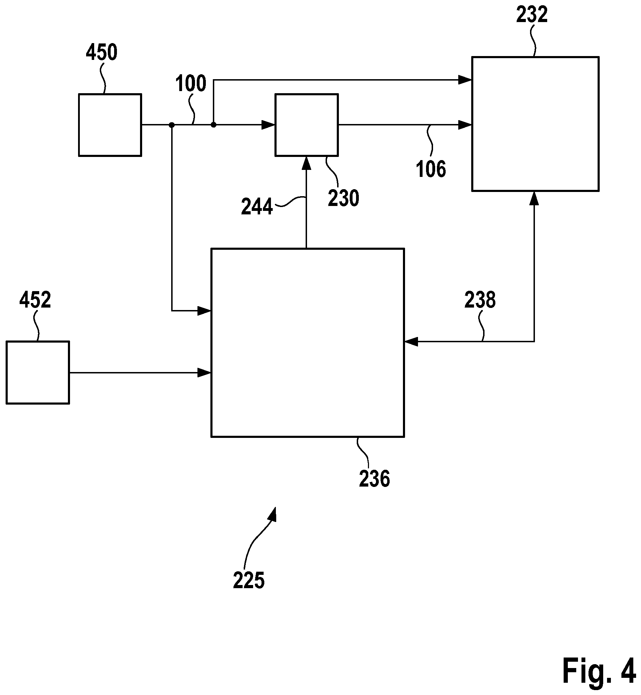

Die Kombinationseinrichtung 237 oder eine entsprechend geeignete Einrichtung kann auch als ein Bestandteil der Modifizierungseinrichtung 236 angesehen werden, wie es in Fig. 4 gezeigt ist. Beispielsweise kann das Modussignal 240 auch verwendet werden, um eine Erzeugung des Ausblendsignals während des Normalbetriebs zu unterbinden, wodurch von der Ausblendeinrichtung 230 keine Taktzyklen des Taktsignals 100 ausgeblendet werden.

Fig. 3 zeigt ein Ablaufdiagramm eines Verfahrens zum Bereitstellen eines Taktes für eine elektronische Schaltung gemäß einem Ausführungsbeispiel. Das Verfahren umfasst einen Schritt 350, in dem Taktzyklen eines Taktsignals unter Verwendung eines sequenzgesteuerten Ausblendsignals ausgeblendet werden, um ein modifiziertes Taktsignal zu erzeugen und einen Schritt 352, in dem das modifizierte Taktsignal an die elektronische Schaltung bereitgestellt wird. Die Schritte 350, 352 können unter Verwendung der anhand von Fig. 2 gezeigten Vorrichtung ausgeführt werden.

Optional wird in einem Schritt 354 das Ausblendsignal erzeugt. Dazu kann gemäß einem Ausführungsbeispiel in einem Schritt 356 ein Parameter der Erzeugungsvorschrift eingestellt werden, über den ein Verhältnis zwischen ausgeblendeten und den nicht ausgeblendeten Taktzyklen eingestellt wird.

Fig. 4 zeigt ein Blockschaltbild einer Vorrichtung 225 zum Bereitstellen eines Taktes für eine elektronische Schaltung 232 gemäß einem Ausführungsbeispiel. Gemäß diesem Ausführungsbeispiel handelt es sich bei der elektronischen Schaltung 232 um einen Prozessor 232. Die Vorrichtung 225 entspricht im Wesentlichen der anhand von Fig. 2 beschriebenen Vorrichtung 225.

Im Folgenden wird aus Gründen der Einfachheit ein 1-Takt-Design angenommen. Dabei kann der beschriebene Ansatz auch auf Mehrtaktdesigns angewendet werden.

Eine Ausblendeinrichtung 230 (engl. clock gating module), wird verwendet, um eine ausgeblendete (engl. gated) Version eines Haupttaktsignals 100 zu generieren, dass durch ein geeignetes System 450 extern zu dem Prozessor 232 bereitgestellt wird. Wenn das Taktsignal 100 gesperrt wird, gibt die Ausblendeinrichtung 230 als modifiziertes Taktsignal 106 ein "immer-hoch" oder "immer-niedrig" Signal aus, wodurch der Takt wirksam gestoppt wird. Andernfalls wird das Haupt-Takt-Signal 100 nicht modifiziert ausgegeben. In diesem Fall entspricht das modifizierte Taktsignal 106 dem Taktsignal 100. Beispielsweise kann die Ausblendeinrichtung 230 entsprechend der anhand von Fig. 2 beschriebenen Ausblendeinrichtung ausgeführt sein.

Eine Modifikationseinrichtung 236 (engl. gated clock controller) wird verwendet, um die Ausblendeinrichtung 230 zu steuern. Die Modifikationseinrichtung 236 wird verwendet um zumindest einen der im folgenden genannten unterschiedlichen Takt-Modi zu generieren. Einen Normalmodus, in dem der Haupt-Takt nicht gesperrt ist, einen Schlafmodus, in dem der Haupt-Takt vollständig gesperrt ist, und einen Drosselmodus, in dem einige Taktzyklen des Haupt-Taktes gesperrt sind. Beispielsweise kann die Modifikationseinrichtung 236 entsprechend der anhand von Fig. 2 beschriebenen Modifikationseinrichtung 236 ausgeführt sein.

Der Prozessor 232 ist gemäß diesem Ausführungsbeispiel mit einer gesperrten Version des Haupt-Taktes und möglicherweise mit der unmodifizierten Version desselben verbunden. Somit wird dem Prozessor 232 sowohl das Taktsignal 100 als auch, zumindest im Drosselmodus, Speichermodus und im Schlafmodus, das modifizierte Taktsignal 106 zugeführt.

Im Normalmodus wird das externe Taktsignal 100 nicht modifiziert zu dem Prozessor 232 geleitet.

Im Schlafmodus ist das externe Taktsignal 100 von der Ausblendeinrichtung 230 vollständig gesperrt, um den Prozessor 232 anzuhalten.

Im Drosselmodus wird gemäß einem Ausführungsbeispiel eine Pseudozufallssequenz verwendet, um die Ausblendeinrichtung 230 zu steuern, um das Taktsignal 106 zu generieren, von dem einige Taktpulse ausgeschnitten sind. Auf diese Weise wird die Taktfrequenz wirksam reduziert. Die Größe des Drosselns kann zum Zeitpunkt des Designs der Vorrichtung 225 festgelegt worden sein oder einstellbar gesteuert werden, beispielsweise durch Auswahl eines Arbeitszyklus einer Pseudo-Zufalls-Sequenz, die zum Generieren des modifizierten Taktsignals 106 verwendet wird. Dies kann beispielsweise dadurch erfolgen, dass zwei oder mehrere Anschlüsse des Pseudozufallssequenz-Generators, der gemäß einem Ausführungsbeispiel von der Modifizierungseinrichtung 236 umfasst ist, kombiniert werden, um ein geeignetes Signal zum Takteinschalten zu generieren. Dabei wird die Drosselung typischerweise so eingestellt, dass die Schlafdauer minimiert wird.

Zusätzlich können, wie zuvor ausgeführt, andere Sequenzen verwendet werden, um die Ausblendeinrichtung 230 zu steuern. Andere Sequenzen, z.B. zählergesteuerte Sequenzen, können gleichsam verwendet werden, um das Taktsignal auszudünnen (engl. to prune). Mit Ausdünnen ist das Entfernen einzelner Taktpulse gemeint, sodass eine im Mittel geringere Frequenz erzeugt wird. Die Größe des Ausdünnens kann auswählbar realisiert sein, beispielsweise über einen Konfigurationsregister, auf das durch den Prozessor 232 zugegriffen werden kann. Beispielsweise kann der Prozessor über das Signal 238 auf das Konfigurationsregister zugreifen.

Die Auswahl der Modi kann unter der Steuerung einer externen Einheit 452, des Prozessors, oder der beiden erfolgen.

Wenn ein Interrupt auftritt, wird der Prozessor 232 gemäß einem Ausführungsbeispiel durch Umschalten in den Normalmodus oder den Drosselmodus oder Speichermodus geweckt, wenn der Prozessor 232 zuvor im Schlafmodus war. Dies wird typischerweise unter Verwendung der externen Einheit 452 durchgeführt.

Entsprechend kann der Prozessor 232 beantragen in den Schlafmodus zu schalten, wenn keine weitere Arbeitsbelastung ansteht. Die kann beispielsweise über das Signal 238 erfolgen.

Das Schalten in den und aus dem Drosselmodus kann dynamisch durchgeführt werden, beispielsweise schrittweise unter der Steuerung eines Algorithmus, der auf dem Prozessor 232 ausgeführt wird und der die durchschnittliche oder aktuelle Prozessorlast überwacht, oder durch eine externe Einheit zur Lastüberwachung. Alternativ kann die Zeit, die in dem Drosselmodus verbracht wird, vorkonfiguriert werden, wenn die Prozessorlast im Voraus bekannt ist.

Gemäß einem Ausführungsbeispiel ist die Modifikationseinrichtung 236 für andere Aufgaben erweitert ausgeführt. Wenn der Programmspeicher des Prozessors 232 als Kombination aus langsamen und schnellen Speichermodulen, beispielsweise einem schnellen SRAM und einem langsamen EPROM ausgeführt ist, kann die Modifikationseinrichtung 236 den Prozessortakt wiederholt für eine gegebene Anzahl von Zyklen ausschalten, wenn auf das langsamere der Module zugegriffen wird, wodurch dem langsamen Modul ermöglicht wird, das angeforderte Wort zu holen. Dies ermöglicht die Realisierung von so genannten stall-cyles ohne den daraus abgeleiteten Overhead in den Befehlsdekodierzustandsmaschinen (engl. instruction decoder state machines) des Prozessors. Ein solches modifiziertes Taktsignal 106 ist in Fig. 1 anhand des Taktsignals 118 gezeigt.

Der beschriebene Ansatz ist nicht auf Prozessoranwendungen limitiert, sondern kann auf jedes Bezugssystem angewendet werden, das mit einer geringeren als der nominalen Frequenz betrieben werden soll.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Bereitstellen eines Taktes für eine elektronische Schaltung (232), wobei das Verfahren die folgenden Schritte umfasst:
Ausblenden (350) von Taktzyklen (102) eines Taktsignals (100) unter Verwendung eines sequenzgesteuerten Ausblendsignals (234), um ein modifiziertes Taktsignal (106) zu erhalten, wobei das Ausblendsignal (234) ein zufallsgesteuertes oder pseudo-zufallsgesteuertes Signal repräsentiert; und
Bereitstellen (352) des modifizierten Taktsignals (106) als den Takt für die elektronische Schaltung (232),
**dadurch gekennzeichnet, dass**
im Schritt des Ausblendens (350) Taktzyklen (102) des Taktsignals (100) abhängig von einem Modussignal (240) ausgeblendet werden, um das modifizierte Taktsignal (106) zu erhalten, wobei alle Taktzyklen (102) des Taktsignals (100) ausgeblendet werden, wenn das Modussignal (240) einen Schlafmodus anzeigt, einige der Taktzyklen (102) des Taktsignals (100) unter Verwendung des Ausblendsignals (234) ausgeblendet werden, wenn das Modussignal (240) einen Drosselmodus anzeigt, keine Taktzyklen (102) des Taktsignals (100) ausgeblendet werden, wenn das Modussignal (240) einen Normalmodus anzeigt und alternierend eine vorbestimmte Anzahl von aufeinanderfolgenden Taktzyklen (102) ausgeblendet und eine weitere vorbestimmte Anzahl von aufeinanderfolgenden Taktzyklen (102) nicht ausgeblendet wird, wenn das Modussignal (240) einen Speichermodus (120) anzeigt, wobei der Speichermodus (120) aktiviert wird, wenn Daten aus einem Speicher (242) gelesen werden, der mit einer geringeren Taktrate als die elektronische Schaltung (232) betrieben wird.

2. Verfahren gemäß Anspruch 1, mit einem Schritt des Erzeugens (354) des sequenzgesteuerten Ausblendsignals (234) unter Verwendung einer Erzeugungsvorschrift.

3. Verfahren gemäß Anspruch 2, mit einem Schritt des Einstellens (356) eines Parameters der Erzeugungsvorschrift, wobei der Parameter ein Verhältnis zwischen ersten Zuständen und zweiten Zuständen des Ausblendsignals (234) definiert, wobei im Schritt des Ausblendens ein Taktzyklus (102) des Taktsignals (100) ausgeblendet wird, wenn das Ausblendsignal (234) den ersten Zustand aufweist und ein Taktzyklus (102) des Taktsignals (100) nicht ausgeblendet wird, wenn das Ausblendsignal (234) den zweiten Zustand aufweist.

4. Verfahren gemäß Anspruch 3, bei dem im Schritt des Einstellens (356) der Parameter unter Verwendung eines eine Auslastung der elektronischen Schaltung (232) anzeigenden Auslastungssignals (238) eingestellt wird.

5. Verfahren gemäß einem der vorangegangenen Ansprüche, mit einem Schritt des Bereitstellens des Taktsignals (100) zusätzlich zu dem modifizierten Taktsignal (106) an eine Schnittstelle zu der elektronischen Schaltung (232).

6. Vorrichtung (225) zum Bereitstellen eines Taktes für eine elektronische Schaltung (232), die eingerichtet ist, das Verfahren gemäß einem der vorangegangenen Ansprüche auszuführen.

7. Prozessorvorrichtung mit folgenden Merkmalen:
einer Einrichtung (450) zum Bereitstellen eines Taktsignals (100);
einem Prozessor (232); und
einer Vorrichtung (225) gemäß Anspruch 6 zum Bereitstellen eines Taktes für den Prozessor (232).

8. Computerprogramm, das dazu eingerichtet ist, das Verfahren gemäß einem der Ansprüche 1-5 auszuführen.

9. Maschinenlesbares Speichermedium, auf dem das Computerprogramm nach Anspruch 8 gespeichert ist.

## Claims

1. Method for providing a clock for an electronic circuit (232), wherein the method comprises the following steps of:
masking (350) clock cycles (102) of a clock signal (100) using a sequence-controlled masking signal (234) in order to obtain a modified clock signal (106), wherein the masking signal (234) represents a randomly controlled or pseudo-randomly controlled signal; and
providing (352) the modified clock signal (106) as the clock for the electronic circuit (232),
**characterized in that**
in the masking step (350), clock cycles (102) of the clock signal (100) are masked on the basis of a mode signal (240) in order to obtain the modified clock signal (106), wherein all clock cycles (102) of the clock signal (100) are masked if the mode signal (240) indicates a sleep mode, some of the clock cycles (102) of the clock signal (100) are masked using the masking signal (234) if the mode signal (240) indicates a throttling mode, no clock cycles (102) of the clock signal (100) are masked if the mode signal (240) indicates a normal mode, and a predetermined number of successive clock cycles (102) are masked and a further predetermined number of successive clock cycles (102) are not masked in alternation if the mode signal (240) indicates a memory mode (120), wherein the memory mode (120) is activated if data are being read from a memory (242) which is operated at a lower clock rate than the electronic circuit (232).

2. Method according to Claim 1, having a step of generating (354) the sequence-controlled masking signal (234) using a generating rule.

3. Method according to Claim 2, having a step of setting (356) a parameter of the generating rule, wherein the parameter defines a relationship between first states and second states of the masking signal (234), wherein, in the masking step, a clock cycle (102) of the clock signal (100) is masked if the masking signal (234) has the first state and a clock cycle (102) of the clock signal (100) is not masked if the masking signal (234) has the second state.

4. Method according to Claim 3, in which, in the setting step (356), the parameter is set using a utilization signal (238) which indicates utilization of the electronic circuit (232).

5. Method according to one of the preceding claims, having a step of providing an interface to the electronic circuit (232) with the clock signal (100) in addition to the modified clock signal (106).

6. Apparatus (225) for providing a clock for an electronic circuit (232), which apparatus is configured to carry out the method according to one of the preceding claims.

7. Processor apparatus having the following features:
a device (450) for providing a clock signal (100);
a processor (232); and
an apparatus (225) according to Claim 6 for providing a clock for the processor (232).

8. Computer program which is configured to carry out the method according to one of Claims 1-5.

9. Machine-readable storage medium on which the computer program according to Claim 8 is stored.

## Revendications

1. Procédé pour fournir une horloge destinée à un circuit électronique (232), dans lequel le procédé comprend les étapes consistant à :
supprimer (350) des cycles d'horloge (102) d'un signal d'horloge (100) au moyen d'un signal de suppression (234) à commande séquentielle pour obtenir un signal d'horloge modifié (106), dans lequel le signal de suppression (234) représente un signal commandé de manière aléatoire ou commandé de manière pseudo-aléatoire ; et
fournir (352) le signal d'horloge modifié (106) en tant qu'horloge destinée au circuit électronique (232),
**caractérisé en ce que**
lors de l'étape de suppression (350), des cycles d'horloge (102) du signal d'horloge (100) sont supprimés en fonction d'un signal de mode (240) pour obtenir le signal d'horloge modifié (106), dans lequel tous les cycles d'horloge (102) du signal d'horloge (100) sont supprimés lorsque le signal de mode (240) indique un mode de veille, certains des cycles d'horloge (102) du signal d'horloge (100) sont supprimés au moyen du signal de suppression (234) lorsque le signal de mode (240) indique un mode d'étranglement, aucun cycle d'horloge (102) du signal d'horloge (100) n'est supprimé lorsque le signal de mode (240) indique un mode normal et, de manière alternée, un nombre prédéterminé de cycles d'horloge successifs (102) est supprimé et un autre nombre prédéterminé de cycles d'horloge successifs (102) n'est pas supprimé lorsque le signal de mode (240) indique un mode de mémorisation (120), dans lequel le mode de mémorisation (120) est activé lorsque des données sont lues dans une mémoire (242) qui est mise en fonctionnement à une fréquence d'horloge inférieure à celle du circuit électronique (232).

2. Procédé selon la revendication 1, comprenant une étape consistant à générer (354) le signal de suppression (234) à commande séquentielle au moyen d'une règle de génération.

3. Procédé selon la revendication 2, comprenant une étape consistant à régler (356) un paramètre de la règle de génération, dans lequel le paramètre définit une relation entre des premiers états et des seconds états du signal de suppression (234), dans lequel, lors de l'étape de suppression, un cycle d'horloge (102) du signal d'horloge (100) est supprimé lorsque le signal de suppression (234) présente le premier état et un cycle d'horloge (102) du signal d'horloge (100) n'est pas supprimé lorsque le signal de suppression (234) présente le second état.

4. Procédé selon la revendication 3, dans lequel, lors de l'étape de réglage (356), le paramètre est réglé au moyen d'un signal de charge (238) indiquant une charge appliquée au circuit électronique (232).

5. Procédé selon l'une des revendications précédentes, comprenant une étape consistant à fournir le signal d'horloge (100) en plus du signal d'horloge modifié (106) à une interface avec le circuit électronique (232).

6. Dispositif (225) pour fournir une horloge à un circuit électronique (232) conçu pour mettre en œuvre le procédé selon l'une des revendications précédentes.

7. Dispositif à processeur présentant les caractéristiques suivantes :
un moyen (450) pour fournir un signal d'horloge (100) ;
un processeur (232) ; et
un dispositif (225) selon la revendication 6 pour fournir une horloge destinée au processeur (232).

8. Programme informatique conçu pour mettre en œuvre le procédé selon l'une des revendications 1 à 5.

9. Support de stockage lisible par machine sur lequel est stocké le programme informatique selon la revendication 8.
